# FASCICULE DE BREVET EUROPEEN

(11) **EP 0 342 732 B1**
(45) Date de publication et mention de la délivrance du brevet: **27.10.1993**
(21) Numéro de dépôt: 89201142.0
(22) Date de dépôt: 05.05.1989
(51) Int. Cl.: G06F 9/22

(54) **Unité de contrôle d'un circuit intégré de traitement de données**
Steuerungseinheit in einer integrierten Datenverarbeitungsschaltung
Control unit in an integrated data-processing circuit

(30) Priorité: 11.05.1988 FR 8806364
(43) Date de publication de la demande: 23.11.1989
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Tycho, Philippe Société Civile S.P.I.D., F-75007 Paris (FR); Cherbonnel, Bénédicte Société Civile S.P.I.D., F-75007 Paris (FR)
(74) Mandataire: Landousy, Christian

(56) Documents cités:
- EP-A- 0 131 658
- EP-A- 0 269 167
- GB-A- 2 092 786
- US-A- 3 566 364
- IEEE TRANSACTIONS ON COMPUTERS, vol. C-31, no. 12, décembre 1982, pages 1142-1156, IEEE, New York, US; T. BABA et al.: "A two-level microprogrammed multiprocessor computer with nonnumeric functions"

## Description

L'invention concerne une unité de contrôle qui agit sur des modules de traitement d'un circuit intégré de traitement de données auxquels il transmet des commandes opératives, l'unité de contrôle étant pilotée par une horloge et par un générateur d'instructions qui délivre des instructions.

Un circuit intégré de ce genre est connu du document intitulé "A single chip, highly integrated, user programmable microcomputer" D. STAMM, D. BUDDE et B. MORGAN, PHILADELPHIE 1977, IEEE International Solid State Circuit Conference (1977, page 142).

Dans un tel circuit intégré de traitement de données on peut distinguer globalement deux parties : l'unité de traitement des données et l'unité de contrôle. L'unité de traitement est formée de plusieurs opérateurs : des opérateurs arithmétiques, des opérateurs logiques, tels que des registres, de la logique combinatoire (masquage, extension, mise à zéro, décalage), des opérateurs d'entrée/sortie, etc... Chaque opérateur est défini par sa fonction et par le temps nécessaire pour effectuer cette fonction. L'unité de contrôle décode les instructions et envoie les commandes appropriées aux opérateurs qui effectuent alors l'opération demandée par l'instruction. L'unité de traitement et l'unité de contrôle sont séquencées par une horloge.

Pour définir le séquencement selon l'art antérieur, il faut définir le temps de cycle machine. Ce temps de cycle machine correspond à la microcommande, générée par l'instruction, pour laquelle le temps mis par la donnée pour traverser les opérateurs nécessaires pour l'exécution de cette microcommande est maximal. Ce temps de cycle machine est divisé en un nombre fixe de phases, la durée de chaque phase étant un nombre fixe de demi-périodes d'horloge. Chaque phase valide les commandes envoyées par l'unité de contrôle à un opérateur donné. Les opérateurs d'une chaîne de traitement sont donc actifs suivant les phases successives du cycle machine. Or un tel circuit intégré de traitement numérique de données présente des inconvénients dans l'échange de signaux de contrôle et de données. Cet échange est en effet fondé sur un séquencement global des commandes. Tous les signaux de séquencement de chacun des opérateurs sont générés de façon globale à l'extérieur de l'unité de traitement. Cela multiplie le nombre de signaux à générer et augmente la complexité des interconnexions.

Le cycle machine et les phases, définis pour assurer des performances optimales à une unité de traitement, servent également à cadencer l'unité de contrôle. Ceci pose quelques problèmes :
- Les phases utiles à l'unité de traitement doivent être réutilisées pour le cadencement des modules de contrôle nécessitant des séquencements différents, d'où une dégradation possible des performances de l'unité de contrôle.
- La conception de l'unité de contrôle est très liée à la conception de l'unité de traitement et une modification du séquencement de l'unité de traitement entraine une modification du séquencement de l'unité de contrôle.

Un tel système est aussi proposé par la publication US-A-3 566 364 (HAUCK) utilisant une unité de contrôle modulaire. Plusieurs modules de contrôle avec une hiérarchie dynamique entre ces modules y sont divulgués, c'est-à-dire des modules de contrôle qui puissent appeler d'autres modules de contrôle pour certaines opérations. Après avoir completé une opération, un feed-back est rendu au module appelant.

L'invention a pour but de supprimer ces différents inconvénients pour permettre une plus grande modularité du circuit intégré afin de réduire son temps de conception. Pour cela l'invention utilise des modules préanalysés quant à la fonction qu'ils effectuent et quant aux séquencements qui leur est nécessaire.

Dans ce but l'invention telle que définie dans le préambule est remarquable en ce que l'unité de contrôle comprend au moins un module de contrôle constitué d'un opérateur de contrôle et d'un portier qui reçoit un sémaphore d'entrée et transmet au moins un sémaphore de sortie et qui, après réception du sémaphore d'entrée, délivre à son opérateur de contrôle des signaux adaptés à ses paramètres fonctionnels, le portier à l'issue du traitement effectué par son opérateur de contrôle validant la délivrance par celui-ci de suites de commandes opératives vers au moins un module de traitement suivant ou de suites de micro-instructions vers au moins un module de contrôle suivant sous le contrôle de sémaphores de sortie qui sont transmis :
- audit module de contrôle suivant pour que son portier positionne son opérateur de contrôle afin qu'il réceptionne lesdites suites de micro-instructions et pour chacune d'entre elles réémette à son tour des suites de micro-instructions de sortie vers d'autres modules de contrôle ou des suites de commandes opératives vers d'autres modules de traitement, et désactive le sémaphore d'entrée en fin d'exécution de chaque micro-instruction d'entrée,
- ou audit module de traitement suivant pour qu'il réceptionne lesdites suites de commandes opératives et désactive le sémaphore d'entrée en fin d'exécution de chaque commande opérative,
les portiers possédant en outre :
. afin d'en avertir un portier précédent, des moyens de désactivation de leur sémaphore d'entrée lorsque tous les opérateurs de contrôle suivants et tous les modules de traitement suivants ont terminé l'exécution respectivement de leurs suites de micro-instructions d'entrée ou de leurs suites de commandes opératives,
. et, pour chaque micro-instruction émise, des moyens de réception des sémaphores de sortie validés qui sont été désactivés par un portier suivant ou par un module de traitement suivant,
les modules de contrôle s'échangeant en outre des comptes rendus d'exécution entrée/sortie par leur opérateur, ce qui associé à l'échange des sémaphores par leur portier assure un séquencement auto-cadencé à chaque module de contrôle qui est également piloté par l'horloge, chaque module de traitement étant aussi piloté par la même horloge, le premier module de contrôle recevant ses instructions directement du générateur d'instructions et échangeant avec lui un sémaphore.

Afin de pallier les déficiences des solutions antérieures, l'invention concerne un nouveau mode de protocole et de séquencement. L'utilisation de phases générées par un séquenceur externe à l'unité de contrôle est supprimé. A chaque opérateur de contrôle on associe un portier qui en fait un opérateur auto-cadencé.

Le portier associé à un opérateur de contrôle gère les échanges de micro-instructions et de comptes rendus avec les modules de contrôle d'amont et d'aval ou avec les modules de traitement d'aval par application d'un protocole. De plus, le portier génère les signaux de cadencement propres à l'opérateur de contrôle auquel il est associé. De ce fait chaque opérateur a un séquencement local. Pour cela l'invention est remarquable en ce que le portier comprend :
- un circuit d'entrée du sémaphore d'entrée, et un circuit de validation de sortie pour chaque sémaphore de sortie, ces circuits étant validés par l'opérateur de contrôle,
- un générateur d'une impulsion qui est déclenchée soit par l'activation du sémaphore d'entrée soit par la désactivation des sémaphores de sortie,
- un générateur de phases, qui reçoit ladite impulsion, délivre les phases nécessaires à l'opérateur de contrôle et pilote les circuits de validation de sortie et le circuit d'entrée.

Egalement l'invention est remarquable en ce que l'opérateur de contrôle comprend:
- un séquenceur, qui reçoit les micro-instructions d'entrée, les comptes rendus d'entrée, et des informations envoyées par la mémoire, qui détermine en fonction de ses entrées la nouvelle adresse du mot à lire en mémoire, qui génère à la fin de l'exécution de chaque micro-instruction d'entrée, le signal de fin d'exécution et un compte rendu de sortie,
- une mémoire, cadencée par le portier, adressée par le séquenceur, qui émet des micro-instructions de sortie, des informations codées pour le séquenceur et transmet au portier des signaux de validation de sortie,
- un registre pour conserver temporairement les comptes rendus de sortie,
- au moins un registre pour conserver temporairement les micro-instructions de sortie,
le séquenceur, la mémoire et les registres étant pilotés par le portier, et lui transmettant le signal de fin d'exécution et les signaux de validation.

Selon un mode particulier de réalisation le séquenceur et la mémoire sont remplacés par un réseau à logique programmée PLA.Dans ce cas l'opérateur de contrôle comprend:
- un registre pour conserver temporairement les comptes rendus de sortie,
- au moins un registre pour conserver temporairement les micro-instructions de sortie,
- un réseau à logique programmée qui reçoit les micro-instructions d'entrée et les comptes rendus d'entrée et émet, pour chaque micro-instruction d'entrée, une suite de micro-instructions de sortie et un compte rendu de sortie,
le réseau à logique programmée et les registres étant pilotés par le portier et lui transmettant le signal de fin d'exécution et les signaux de validation.

L'invention sera mieux comprise à l'aide des figures suivantes données à titre d'exemples non limitatifs qui représentent :
figure 1 : un schéma de l'unité de contrôle selon l'invention opérant avec des modules de traitement.
figure 2 : un schéma d'un module de contrôle.
figures 3A et 3B, 4A et 4B, 5A et 5B : trois schémas et trois diagrammes des temps de blocs fonctionnels du générateur de phases pour générer des phases à durée et à position temporelle déterminées.
figure 6 : un schéma montrant l'organisation des blocs fonctionnels afin de constituer un générateur de phases.
figure 7 : un schéma représentant un registre à décalage du générateur de phases.
figure 8A à 8E : un schéma d'un générateur d'une impulsion et les diagrammes de temps correspondants.
figures 9A, 9B : des circuits d'entrée et de sortie pour activer/désactiver les sémaphores.
figure 10 : un schéma d'un module de traitement donné à titre d'exemple pouvant être associé à l'unité de contrôle.

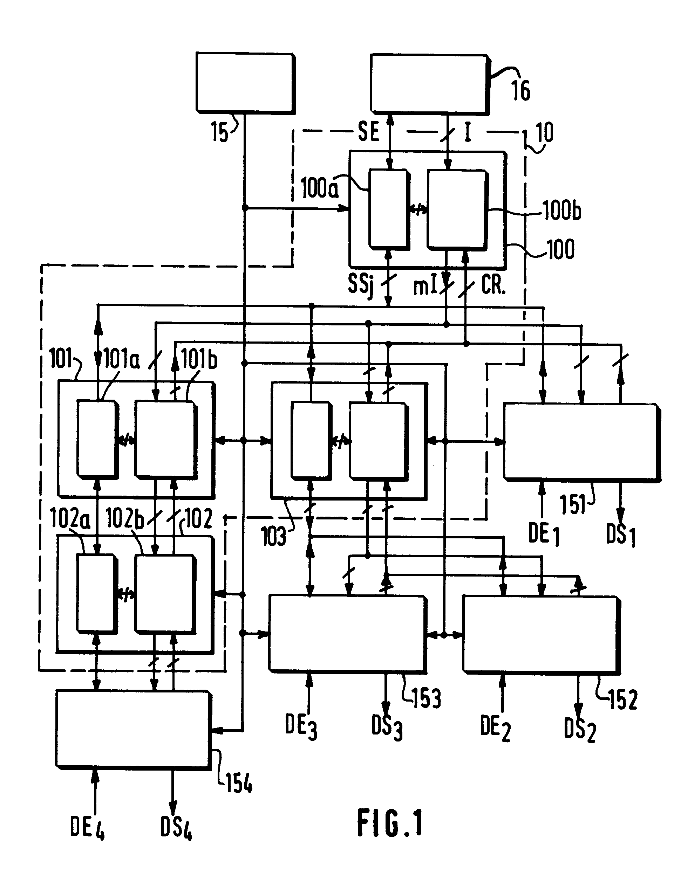

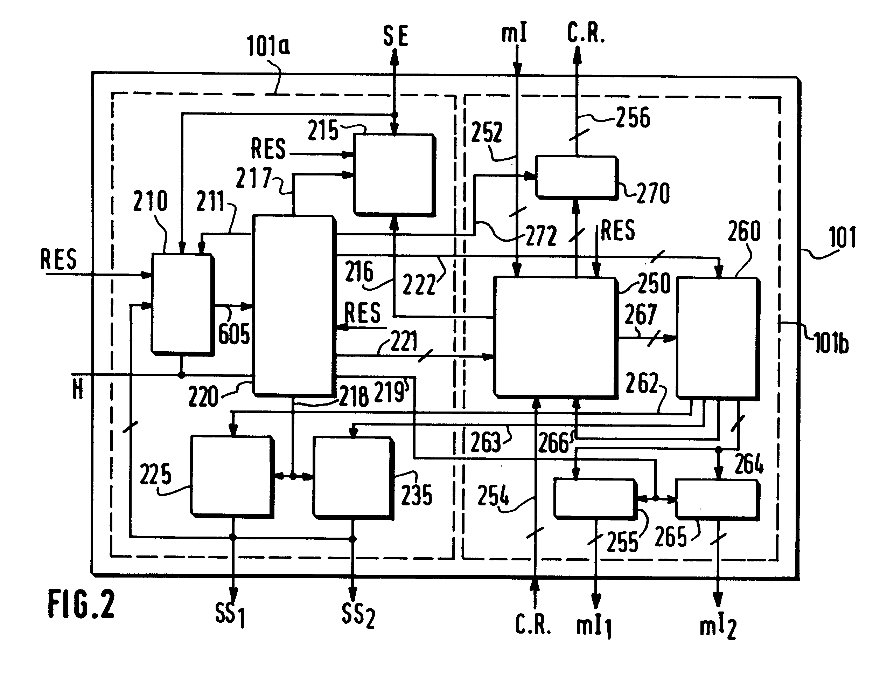

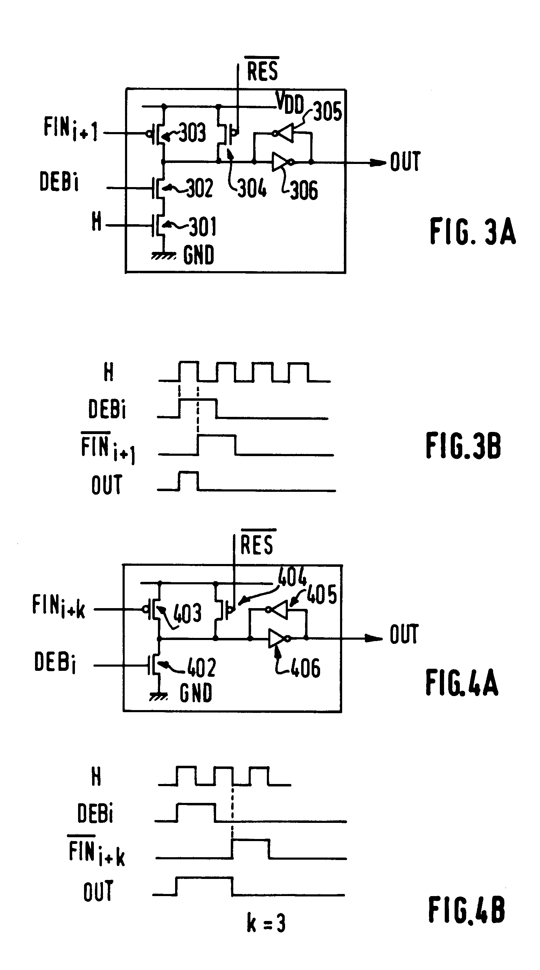

La figure 1 représente une unité de contrôle 10 qui comprend un module père 100 qui est réuni à des modules fils tels que les modules 101, 103 et à des modules de traitement par exemple le module 151. Un module fils va pouvoir être référencé selon deux appellations possibles : module d'amont et module d'aval. Parmi les modules fils on distingue :
- ceux qui sont réunis directement à un ou plusieurs modules de traitement : ainsi sur l'exemple le module de contrôle 103 est réuni à deux modules de traitement 152, 153.
- ceux qui sont réunis à un autre module de contrôle : ainsi le module de contrôle 101 est réuni sur l'exemple à un module de contrôle 102 qui est lui-même réuni à un module de traitement 154.

Ils vont pouvoir être référencés en tant que module d'amont ou module d'aval selon que l'on considère leur relation avec ce qui précède ou avec ce qui suit. Le module 101 est un module d'aval par rapport au module 100, mais c'est un module d'amont par rapport au module 102. Il est ainsi possible d'avoir selon l'invention beaucoup plus de niveaux que ceux représentés sur la figure 1.

Ainsi chaque module de contrôle qu'il soit père ou fils pourra lui-même avoir plusieurs modules fils. En bout de chaîne le module final est un module de traitement.

Chaque module d'aval dialogue avec un module d'amont à l'aide d'un sémaphore, reçoit de lui des micro-instructions si le module d'aval est un module de contrôle ou des commandes opératives si c'est un module de traitement et lui renvoie des comptes rendus d'exécution. De même chaque module d'amont dialogue avec plusieurs modules d'aval à l'aide d'un sémaphore par module et leur transmet des micro-instructions si le module d'aval est un module de contrôle ou des commandes opératives si c'est un module de traitement et reçoit de tous les modules d'aval des comptes rendus d'exécution.

Tous les modules sont pilotés par la même horloge délivrée par le générateur d'horloge 15. Le module père 10 est directement relié au générateur d'instructions 16 qui lui transmet des instructions I et avec lequel il échange un sémaphore d'entrée SE.

Chaque module de contrôle 100, 101, 102, 103 comprend un portier respectivement 100a, 101a, 102a, 103a, et un opérateur de contrôle respectivement 100b, 101b, 102b, 103b. Chaque portier réceptionne et émet des sémaphores. Chaque opérateur réceptionne et émet des micro-instructions et des comptes rendus.

Chaque module de traitement 151, 152, 153, 154 exécute les micro-instructions reçues en agissant en conséquence sur des données d'entrée respectivement DE1, DE2, DE3, DE4, et en réémettant des données de sortie respectivement DS1, DS2, DS3, DS4. Les modules de traitement sont par exemple une unité arithmétique et logique, des mémoires, des compteurs, des registres, etc.

La figure 2 représente le schéma d'un module de contrôle 101 avec seulement deux sémaphores de sortie SS1, SS2. Il comprend : un portier 101a et un opérateur de contrôle 101b.

Le portier comprend un générateur 210 d'une impulsion 605 activée et désactivée par le sémaphore d'entrée SE, par les sémaphores de sortie SS1et SS2 et par une phase de réactivation 211 issue du générateur de phases 220. Il reçoit également l'horloge H. L'impulsion entre dans un générateur de phases 220 qui délivre des phases à l'opérateur de contrôle 101b. Le générateur de phases 220 agit également, par une phase d'activation 218 sur les circuits de validation de sortie 225, 235 qui envoient les sémaphores de sortie SS1, SS2, et sur le circuit d'entrée 215 qui reçoit le sémaphore d'entrée SE par une phase de désactivation 217 du sémaphore d'entrée. Le circuit d'entrée 215 reçoit de l'opérateur de contrôle 101b un signal de remise à zéro du sémaphore d'entrée (connexion 216).Ce signal est le signal de fin d'exécution.

Les circuits de validation de sortie 225, 235 reçoivent de l'opérateur de contrôle 101b chacun un signal de validation 262, 263 du sémaphore de sortie . Chaque signal permet dans le cas où le module de contrôle 101 est connecté à plusieurs modules de contrôle d'aval ou de traitement de choisir si le ou les modules connectés doivent être activés.

Le générateur d'une impulsion, le générateur de phases et le circuit d'entrée reçoivent également chacun le signal RES qui permet l'initialisation du circuit.

L'opérateur de contrôle 101b comprend :
- un séquenceur 250
   a) qui reçoit
      . des micro-instructions d'entrée mI (bus 252) en provevenance d'un module de contrôle d'amont
      . et des comptes rendus d'entrée (bus 254) en provenance d'un module d'un contrôle d'aval ou d'un module de traitement
      . une information codée venant de la mémoire (BUS 266) permettant le calcul de la nouvelle adresse
      . le signal RES d'initialisation du circuit
   b) et qui délivre
      . un compte rendu de sortie (bus 256) en direction d'un module de contrôle d'amont à travers un registre de sortie 270 piloté par le générateur de phases 220 du portier 101a (phase de validation 272 de sortie des comptes rendus)
      . l'adresse pour la mémoire (BUS 267)
- une mémoire 260 qui délivre
   . les micro-instructions de sortie mI₁, mI₂, qui y sont stockées en direction d'un module de contrôle d'aval ou d'un module de traitement à travers des registres de sortie 255, 265 pilotés par le générateur de phase 220 du portier 120a par une phase de validation 219.
   . une information codée envoyée au séquenceur (BUS 266) et permettant le calcul de la nouvelle adresse.

La mémoire 260 est pilotée par le séquenceur 250 et par le générateur de phases 220 du portier 101a par un bus 222 de phases de cadencement. La mémoire 260 pilote à son tour les circuits de validation de sortie 225, 235 du portier (signaux de validation 262, 263) et transmet au séquenceur 250 un bus 266 d'information codée lui permettant de calculer la nouvelle adresse.

Le séquenceur est piloté par le générateur de phases 220 du portier 101a par l'intermédiaire du bus 221 de phases de cadencement. Le générateur de phases pilote les registres de sortie de micro-instructions (phase 219) et le registre de sortie des comptes rendus (phase 272).

A partir des micro-instructions mI reçues par l'opérateur de contrôle 101b, celui-ci va émettre les micro-instructions mI₁, mI₂ qui constituent des sous-micro-instructions des micro-instructions mI reçues. Chaque module de contrôle va ainsi délivrer un sous jeu de micro-instructions en rapport avec les micro-instructions reçues en entrée et avec le module qui lui est connecté en aval.

La figure 3A représente un schéma d'un exemple de réalisation d'un élément du générateur de phase 220 pour délivrer des phases ayant une durée et une position temporelle déterminées. Cette durée est égale à 1 demi-période d'horloge. Un transistor MOS de type P 303 est connecté en série à deux transistors MOS de type N 301, 302, tous trois reliés en série entre une alimentation V_{DD} et une masse GND. Ils reçoivent respectivement sur leur grille des signaux de fin de phase FINᵢ₊₁, de début de phase DEBᵢ et d'horloge H . Pour qu'une impulsion de sortie soit délivrée sur la sortie OUT, correspondant à une phase de l'horloge H, il suffit d'imposer aux signaux DEBᵢ et FINᵢ₊₁ de durer une période d'horloge, et à DEBᵢ d'être en avance d'une demi-période d'horloge sur FINᵢ₊₁ et de commencer sur une phase active de l'horloge H. La sortie OUT, se met à l'état haut lorsque les signaux H et DEBᵢ sont à l'état haut. Dès que le signal FINᵢ₊₁ inversé est à l'état haut, la sortie OUT est mise à l'état bas (figure 3B). Un autre transistor de type P 304 permet de faire une remise à zéro. Deux inverseurs 305, 306 permettent de mémoriser les niveaux.

La figure 4A représente un schéma analogue à celui de la figure 3A mais le transistor qui reçoit le signal d'horloge H a été omis. Ce schéma permet de délivrer des phases dont la durée est strictement supérieure à une demi-période d'horloge. Les transistors 402, 403 et 404 et les inverseurs 405 et 406 opèrent de la même manière que les éléments correspondant de la figure 3A. Ainsi la durée de l'impulsion de sortie (figure 4B) est déterminée par les signaux de début de phase DEBᵢ et de fin de phase FINᵢ₊ₖ. Cette durée est de k périodes d'horloge. Elle peut être positionnée temporellement à un instant prédéterminé correspondant au début d'une des deux phases de l'horloge H.

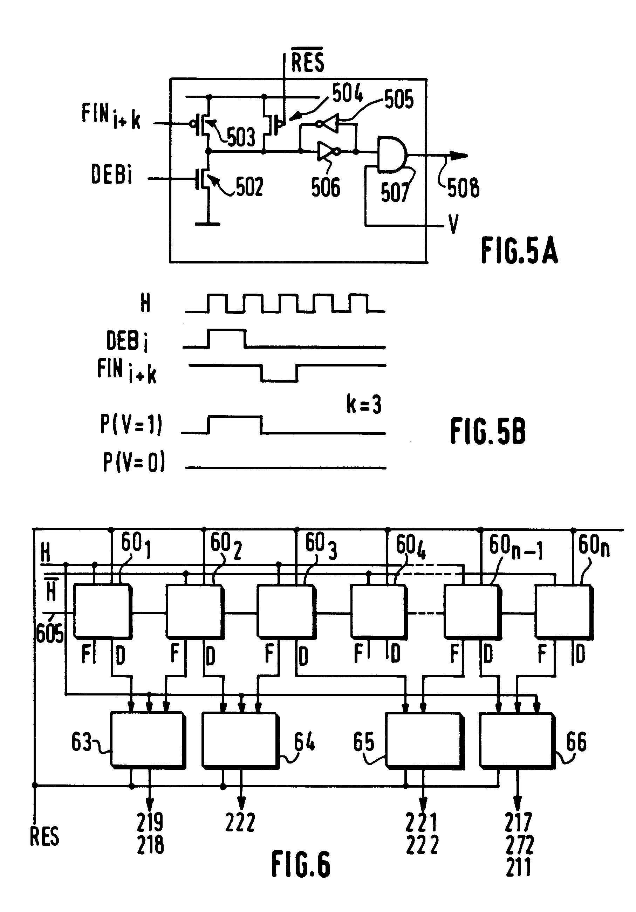

La figure 5A représente un schéma analogue à celui de la figure 4A. Les transistors 502, 503 et 504 et les inverseurs 505, et 506 opèrent de la même manière que les éléments correspondant de la figure 4A. La sortie de l'inverseur 506 est réunie à une porte ET 507 qui reçoit également un signal extérieur V. Ainsi selon l'état logique de ce signal V la sortie 508 dupliquera l'état logique de ce signal V pendant l'impulsion délivrée par l'inverseur 506. Le diagramme des temps est indiqué sur la figure 5B.

Ainsi l'état logique d'une phase, pendant la durée de cette phase, peut être le même que l'état logique d'un signal donné.

Les schémas des figures 3A, 4A et 5A sont donnés à titre d'exemple et l'Homme du métier peut aisément en déterminer d'autres permettant d'obtenir des impulsions à durée et à position temporelle déterminées.

Tous les blocs fonctionnels ainsi obtenus vont pouvoir être organisés pour constituer un générateur de phases.

La figure 6 représente un exemple très simplifié de la manière de combiner ces blocs fonctionnels entre-eux afin d'obtenir un générateur de phases. Des registres à décalage 60₁, 60₂, 60₃, 60₄, ...60ₙ₋₁, 60ₙ se transmettent l'impulsion qui est entrée dans le premier registre 60₁ par la connexion 605. Les registres sont actionnés de deux en deux par la même horloge. Deux registres consécutifs ont une horloge inversée. Ainsi chaque registre va délivrer un signal FIN F et un signal DEB D décalés dans le temps par rapport aux signaux correspondants des autres registres. Ces signaux constituent les différents signaux DEBᵢ, FINᵢ₊₁ et FINᵢ₊ₖ qui vont actionner les blocs fonctionnels 63, 64, 65, 66 constitués par exemple respectivement par les schémas des figures 3A, 3A, 4A et 3A.
Le bloc fonctionnel 63 reçoit DEB₁ et FIN₂.
Le bloc fonctionnel 64 reçoit DEB₂ et FIN₃.
Le bloc fonctionnel 65 reçoit DEB₃ et FINₙ₋₁.
Le bloc fonctionnel 66 reçoit DEBₙ₋₁ et FINₙ.

Leurs sorties constituent les phases délivrées par le générateur de phases.

Ainsi selon cet exemple et par référence à la figure 2 :
- le bloc fonctionnel 63 délivre la phase d'activation 218 et la phase de validation 219 des registres de sortie et des sémaphores,
- le bloc fonctionnel 64 délivre le signal de précharge de la mémoire (un des signaux du bus 222),
- le bloc fonctionnel 65 délivre un des signaux du bus 221 envoyé au séquenceur lui permettant de fonctionner,
- le bloc fonctionnel 66 délivre les signaux
   . 217 de désactivation du sémaphore d'entrée,
   . 272 de validation du registre de compte rendu,
   . 211 de réactivation du générateur d'une impulsion.

Chaque générateur de phases est ainsi construit selon les phases nécessaires à l'opérateur de contrôle qu'il gère.

Ainsi le générateur de phases délivre des phases qui sont individuellement calibrées et positionnées dans le temps à l'aide d'un signal de début et d'un signal de fin de la phase selon un nombre multiple de demi-période d'horloge.

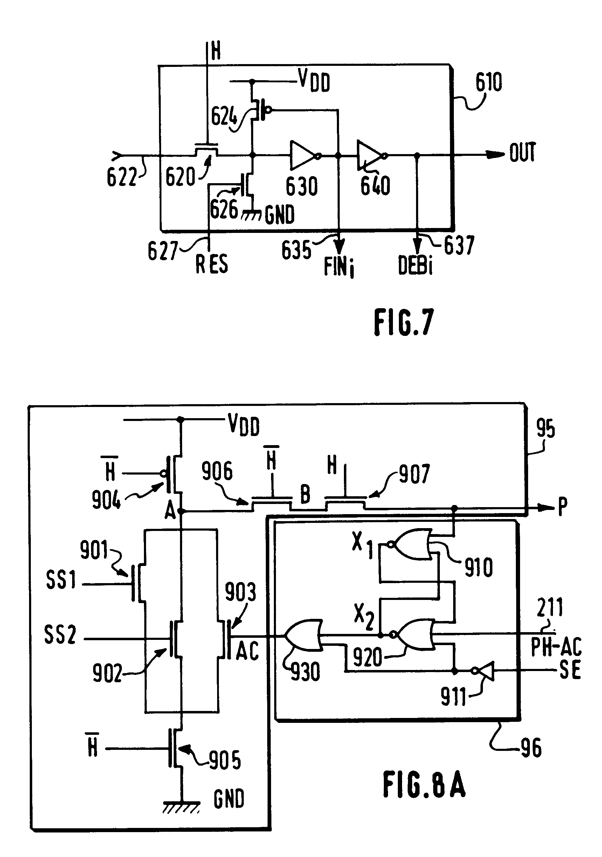

La figure 7 représente un exemple de réalisation d'un des registres à décalage 60₁ à 60ₙ représentés sur la figure 6. Il comprend :
- un transistor MOS 620 monté en porte de transfert commandé sur sa grille par le signal d'horloge H. Le transistor est réuni au signal d'entrée 622 (par exemple l'impulsion 605) et à l'entrée d'un inverseur 630 dont la sortie est réunie à un autre inverseur 640.

L'entrée de l'inverseur 630 est réunie à travers un transistor MOS de type P 624 à l'alimentation V_{DD}. Cette même entrée est réunie à la masse GND par un transistor MOS de type N 626 dont la grille reçoit le signal de remise à zéro RES 627.

La grille du transistor 624 est réunie au point commun des deux inverseurs sur lequel est reliée une connexion 635 pour la sortie du signal de commande FINᵢ. La sortie de l'inverseur 640 délivre le signal DEBᵢ 637 qui est également le signal qui est introduit dans le registre à décalage suivant.

La figure 8A représente un exemple de réalisation d'un générateur d'une impulsion. Il comprend l'émetteur d'une impulsion 95 et un activateur 96. L'émetteur comprend trois transistors 901, 902, 903 MOS de type N montés en parallèle. Leurs drains communs (point A) sont réunis à l'aide d'un transistor MOS de type P 904 à une alimentation VDD. Leurs sources communes sont réunies à l'aide d'un transistor MOS de type N 905 à la masse GND.

Les transistors 901 et 902 ont leurs grilles connectées respectivement aux sémaphores de sortie SS₁ et SS₂. Les transistors 904 et 905 ont leurs grilles reliées au signal d'horloge inversée H̅. Au point A est réuni un transistor MOS de type N 906 en série avec un autre transistor MOS de type N 907. Leur grille est reliée respectivement au signal d'horloge inversée et au signal d'horloge. Ils opèrent en porte de transfert. La sortie du dernier délivre l'impulsion P recherchée.

L'activateur 96 comprend une bascule formée de deux portes NON-OU 910, 920 qui constitue un point mémoire. La porte NON-OU 910 reçoit en entrée l'impulsion P de sortie ainsi que la sortie X2 de la porte 920. La porte 920 reçoit le sémaphore d'entrée SE inversé par un inverseur 911, la phase de réactivation 211 PH-AC issue du générateur de phase 220 (figure 2) et la sortie X₁ de la porte 910.

Une porte OU 930 reçoit la sortie X₂ de la porte 920 et le sémaphore d'entrée SE inversé et délivre le signal AC qui active la grille du transistor 903. Ainsi le sémaphore SE ne peut générer une impulsion de sortie à l'aide de l'horloge que lorsque les deux sémaphores de sortie SS₁ et SS₂ sont inactifs.

Le fonctionnement détaillé de l'émetteur 95 et de l'activateur 96 est le suivant.

L'émetteur met sa sortie P au niveau 1 lorsque AC est au niveau 0 et tous les sémaphores de sortie également à 0.

Dans le cas où un sémaphore est activé (niveau 1) ou si AC est à 1, P reste au niveau 0.

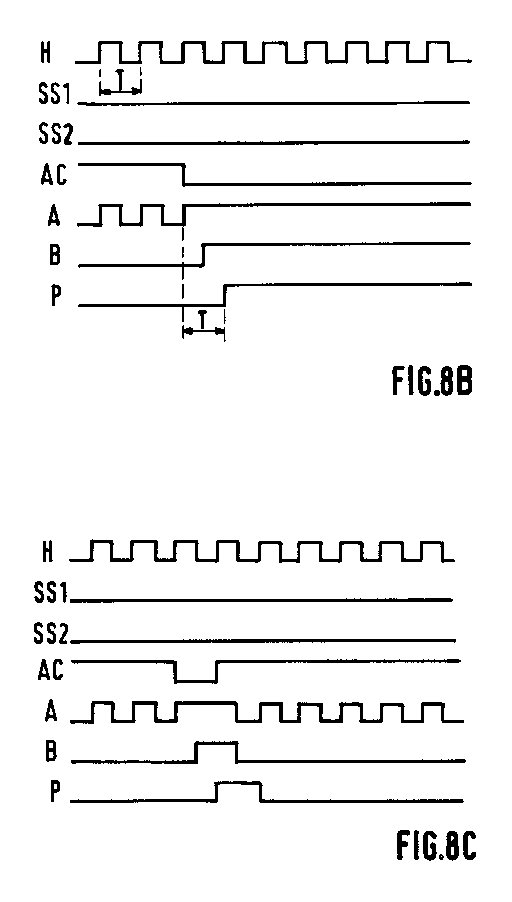

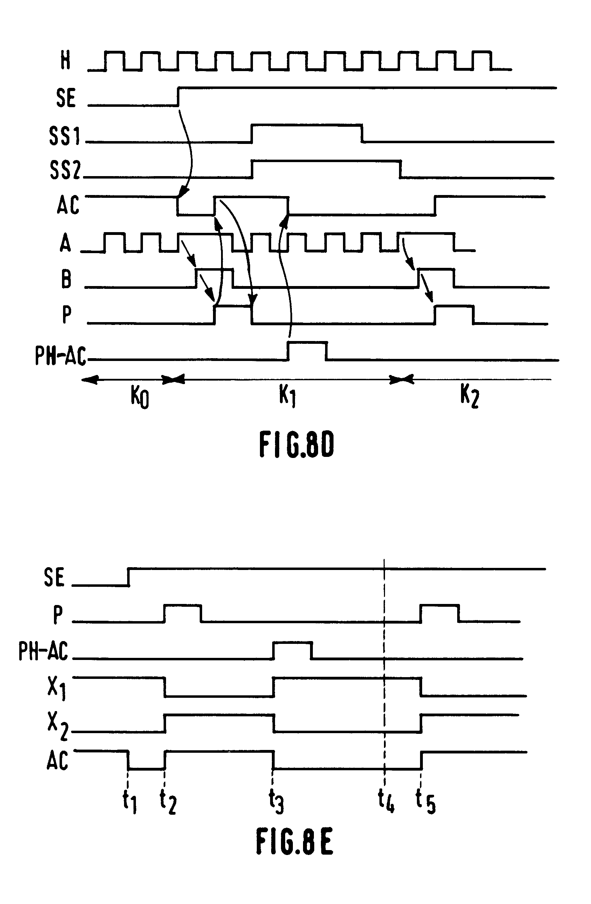

Le délai entre le moment où une des entrées change et où cela est repercuté sur la sortie P est de une période d'horloge. Le diagramme des temps de la figure 8B représente cette situation.
. SS1 et SS2 à 0
. AC passe de 1 à 0
. au point A le niveau passe à 1
. au point B le niveau passe à 1 avec un retard de T/2 sur le point A
. la sortie P passe à 1 avec un retard de T sur le passage du point A.

Pour générer un signal P qui dure une période d'horloge, il faut remettre son entrée AC à 1 une période d'horloge avant la fin de P (à cause du délai de une période). Cette situation est représentée sur le diagramme de la figure 8C.

Le fonctionnement général du générateur de la figure 8 est le suivant :
A - INITIALISATION
   Les sémaphores SE, SS₁ et SS₂ sont inactifs (niveau 0) donc il ne faut pas générer d'impulsion P. L'activateur 96 met sa sortie AC à 1.
B - Le sémaphore SE est activé, l'activateur met sa sortie AC à 0. L'émetteur 95 met sa sortie P à 1. Afin de générer une impulsion de longueur une période, l'activateur 96 remet sa sortie AC à 1 suite au changement d'état sur le signal P en entrée. L'émetteur remet sa sortie P à 0. Ce fonctionnement est représenté sur le diagramme de la figure 8D.
C - L'impulsion est envoyée au générateur de phases 220 (figure 2) qui génère des phases :
   . ceci active les sémaphores de sortie SS₁, SS₂ qui passent à 1
   . et permet la réactivation de l'émetteur d'une impulsion 95. Lorsque PH-AC passe à 1, l'activateur 96 remet sa sortie AC à 0. Ce fonctionnement est représenté sur le diagramme de la figure 8D.
   Lorsque les sémaphores de sortie sont désactivés par d'autres modules de contrôle, les sémaphores SS₁, SS₂ repassent au niveau 0, et AC étant déjà au niveau 0, le générateur 95 remet sa sortie P à 1 pendant une période d'horloge (figure 8D).

Pendant le temps Ko pour un module donné son générateur est inactif. Pendant le temps K1 le générateur est actif et la micro-instruction 1 est exécutée. Et ainsi de suite pour les micro-instructions 2 et suivantes au cours des temps K2 et suivants.

Le diagramme des temps de l'activateur 96 est représenté sur la figure 8E. Son fonctionnement est le suivant :
A - A l'initialisation SE, P et PH-AC sont à l'état 0 et donc AC est à l'état 1. L'émetteur 95 ne peut pas envoyer une impulsion.
B - Lorsque le sémaphore d'entrée est activé (SE=1) la sortie AC passe à 0 et l'émetteur 95 envoie une impulsion.
C - Lorsque P est activé, AC repasse au niveau 1 et l'émetteur 95 est désactivé.
D - Lorsque le générateur de phases 220 (figure 2) active le signal PH-AC 211, l'activateur 96 remet sa sortie AC à 0.
E - Lorsque les sémaphores de sortie SS₁, SS₂ sont désactivés, l'émetteur 95 envoie une période d'horloge plus tard le signal d'impulsion P qui remet la sortie AC à 1 et désactive ainsi l'émetteur 95.

- Au temps t₁ le sémaphore d'entrée SE est activé
- Au temps t₂ l'impulsion P est émise
- Au temps t₃ le signal PH-AC est généré par le générateur de phase 220
- Au temps t₄ les sémaphores de sortie sont désactivés par un autre module
- Au temps t₅ une impulsion P suivante est émise.

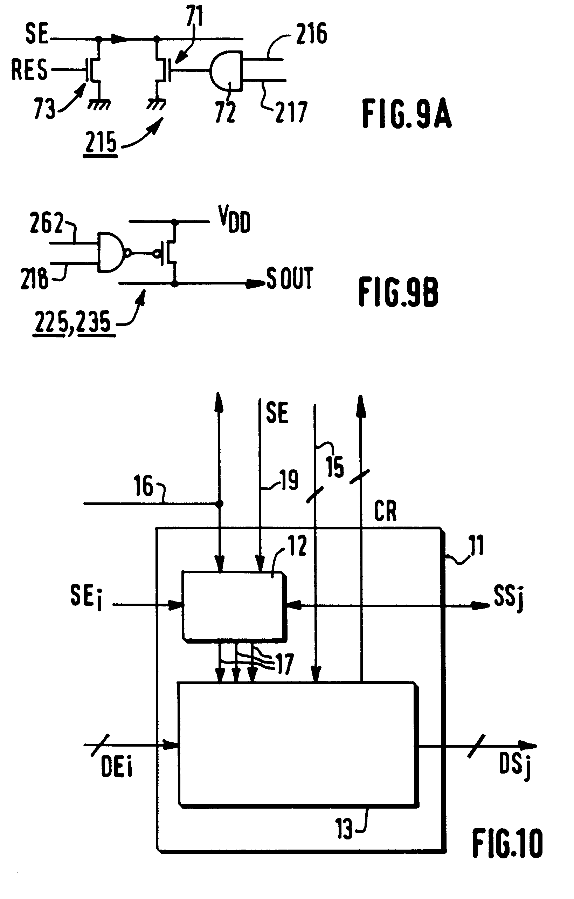

La figure 9A représente le circuit de désactivation du sémaphore d'entrée 215 du portier représenté sur la figure 2. Le sémaphore d'entrée SE est relié au drain d'un transistor MOS de type N 71 dont la source est reliée à la masse. Sa grille reçoit la sortie d'une porte ET 72 qui reçoit le signal de validation de remise à zéro 216 délivré par le séquenceur ainsi que la phase de désactivation 217 délivrée par le générateur de phases. Le sémaphore d'entrée SE est également relié au drain d'un transistor MOS de type N 73 dont la grille reçoit le signal d'initialisation RES.

La figure 9B représente un circuit de validation 225, 235 pour l'activation des sémaphores de sortie représentés sur la figure 2. Une porte NON-ET reçoit la phase d'activation 218 délivrée par le générateur de phases ainsi que le signal de validation 262 délivré par la mémoire.

Protocole de fonctionnement entre trois modules de contrôle :
I - Lorsqu'un opérateur de contrôle 100b envoie une micro-instruction mI₁ à un opérateur de contrôle d'aval 101b, le portier 100a active en même temps son sémaphore de sortie SS₁ qui est le sémaphore d'entrée SE du portier 101a (figures 1 et 2).
II - Le portier 101a par l'intermédiaire de son générateur d'une impulsion 210 détecte cette activation et commence à générer les phases nécessaires à l'opérateur 101b pour dérouler une séquence de micro-instructions. Chaque séquence a la structure suivante : 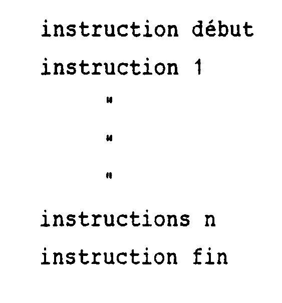 Pour chaque micro-instruction le portier 101a génère une suite de phases et attend ensuite que tous ses sémaphores de sortie SS₁ et SS₂ soient désactivés avant de traiter la micro-instruction suivante.
   Une séquence de micro-instructions comprend trois types de micro-instructions dont le déroulement nécessite la mise en oeuvre de trois modules de contrôle consécutifs 100, 101, 102.
   Examinons ce qui se passe à partir du module 101 (figures 1 et 2).
   A. Micro-instruction "début"
      étape 1
         Les sémaphores de sortie SS₁, SS₂ ne sont pas activés par la phase 218 car les commandes 262, 264 venant de la mémoire et entrant dans le circuit de validation de sortie 225, 235 sont à l'état logique bas.
      étape 2
         Le séquenceur 250 et la mémoire 260 (cadencés par les bus de phase 221 respectivement 222) fonctionnent normalement et déterminent la première micro-instruction qui sera envoyée à l'opérateur de contrôle 102b ultérieurement.
      étape 3
         Le sémaphore d'entrée SE n'est pas désactivé par la phase 217 (le signal de dernière micro-instruction 216 est inactif).
   B. Micro-instruction normale (1 à n)
      étape 1
         Une micro-instruction déterminée lors de l'exécution de la micro-instruction précédente est envoyée à l'opérateur de contrôle 102b en validant par la phase 219 un des registres de sortie 255, 265 de l'opérateur de contrôle 101b et en activant par la phase 218 le sémaphore de sortie SS₁, SS₂ correspondant qui est également le sémaphore d'entrée du portier 102a.
      étape 2
         Elle est identique à l'étape 2 des micro-instructions "début".
      étape 3
         Elle est identique à l'étape 3 des micro-instructions "début".
   C. Micro-instruction fin
      étape 1
         Elle est identique à l'étape 1 des micro-instructions "début".
      étape 2
         Le séquenceur de l'opérateur 101b cadencé par le bus de phases 221 génère le compte rendu d'exécution CR 256.
      étape 3
         Le compte rendu CR est envoyé à l'opérateur de contrôle 100b par validation du registre de compte rendu par la phase 272. Simultanément le sémaphore d'entrée du portier 101a est désactivé par la phase 217 validée par le signal de fin d'exécution 216 généré par le séquenceur, ce qui indique au portier 100a que la micro-instruction est terminée. L'opérateur de contrôle 100b réceptionne en même temps le compte rendu d'exécution et le séquenceur de l'opérateur 100b en tient compte pour déterminer la micro-instruction suivante.
III - Lorsque le portier 100a détecte la désactivation de son sémaphore de sortie, il génère une nouvelle impulsion et les phases nécessaires à la nouvelle micro-instruction.

A titre d'exemple la figure 10 représente le schéma d'un module de traitement 11. Il est constitué également d'un portier 12 et d'un opérateur 13. Le portier 12 reçoit du module de contrôle d'amont un sémaphore d'entrée SE. Une horloge 16 contrôle le fonctionnement du portier 12. L'opérateur 13 reçoit du module de contrôle d'amont des commandes opératives 15 et lui transmet des comptes rendus d'exécution CR. Ces commandes opératives constituent les signaux de travail pour effectuer par exemple dans un opérateur arithmétique et logique une addition, un décalage, une multiplication, etc... Le portier 12 peut lui-même recevoir des sémaphores d'entrée SEᵢ d'un autre module de traitement et transmettre des sémaphores de sortie SSⱼ vers un autre module de traitement. Le portier 12 fournit à l'opérateur 13 les signaux de cadencement 17 qui lui sont nécessaires. L'opérateur 13 reçoit des données d'entrée DEᵢ sous la forme de i mots de plusieurs bits. De même il fournit des données de sortie DSⱼ sous la forme de j mots de plusieurs bits.

Lors de la conception du circuit intégré de traitement numérique les opérateurs et leurs portiers de contrôle mais également de traitement peuvent constituer une bibliothèque de modules précaractérisés, qui peuvent être assemblés pour constituer ledit circuit intégré. Les portiers placés en bibliothèque sont de conception analogue mais il est possible au moment de la conception d'adapter certaines caractéristiques à l'opérateur auquel le portier est associé.

## Revendications

1. Unité de contrôle (10) qui agit sur des modules de traitement (152, 153, 154) d'un circuit intégré de traitement de données auxquels il transmet des commandes opératives, l'unité de contrôle étant pilotée par une horloge (15) et par un générateur d'instructions (16) qui délivre des instructions, caractérisée en ce qu'elle comprend au moins un module de contrôle (100) constitué d'un opérateur de contrôle (100b) et d'un portier (100a) qui reçoit un sémaphore d'entrée (SE) et transmet au moins un sémaphore de sortie (SSⱼ) et qui, après réception du sémaphore d'entrée, délivre à son opérateur de contrôle des signaux adaptés à ses paramètres fonctionnels, le portier à l'issue du traitement effectué par son opérateur de contrôle validant la délivrance par celui-ci de suites de commandes opératives vers au moins un module de traitement suivant ou de suites de micro-instructions vers au moins un module de contrôle suivant (101, 103) sous le contrôle de sémaphores de sortie qui sont transmis :
- audit module de contrôle suivant pour que son portier (101a, 103a) positionne son opérateur de contrôle afin qu'il réceptionne lesdites suites de micro-instructions et pour chacune d'entre elles réémette à son tour des suites de micro-instructions de sortie vers d'autres modules de contrôle (102) ou des suites de commandes opératives vers d'autres modules de traitement (153), et désactive le sémaphore d'entrée en fin d'exécution de chaque micro-instruction d'entrée
- ou audit module de traitement suivant pour qu'il réceptionne lesdites suites de commandes opératives et désactive le sémaphore d'entrée en fin d'exécution de chaque commande opérative,
les portiers possédant en outre :
. afin d'en avertir un portier précédent, des moyens (217) de désactivation de leur sémaphore d'entrée lorsque tous les opérateurs de contrôle suivants et tous les modules de traitement suivants ont terminé l'exécution respectivement de leurs suites de micro-instructions d'entrée ou de leurs suites de commandes opératives,
. et, pour chaque micro-instruction émise, des moyens de réception des sémaphores de sortie validés (225, 235) qui sont été désactivés par un portier suivant ou par un module de traitement suivant,
les modules de contrôle s'échangeant en outre des comptes rendus d'exécution entrée/sortie par leur opérateur (252, 254), ce qui, associé à l'échange des sémaphores par leur portier, assure un séquencement auto-cadencé à chaque module de contrôle qui est également piloté par l'horloge, chaque module de traitement étant aussi piloté par la même horloge, le premier module de contrôle (100) recevant ses instructions directement du générateur d'instructions et échangeant avec lui un sémaphore.

2. Unité de contrôle selon la revendication 1, caractérisée en ce que le portier comprend :
- un circuit d'entrée du sémaphore d'entrée, et un circuit de validation de sortie pour chaque sémaphore de sortie, ces circuits étant validés par l'opérateur de contrôle,
- un générateur d'une impulsion qui est déclenchée soit par l'activation du sémaphore d'entrée soit par la désactivation des sémaphores de sortie,
- un générateur de phases, qui reçoit ladite impulsion, délivre les phases nécessaires à l'opérateur de contrôle et pilote les circuits de validation de sortie et le circuit d'entrée.

3. Unité de contrôle selon une des revendications 1 ou 2, caractérisée en ce que l'opérateur de contrôle comprend:
- un séquenceur, qui reçoit les micro-instructions d'entrée, les comptes rendus d'entrée, et des informations envoyées par la mémoire, qui détermine en fonction de ses entrées la nouvelle adresse du mot à lire en mémoire, qui génère à la fin de l'exécution de chaque micro-instruction d'entrée, le signal de fin d'exécution et un compte rendu de sortie,
- une mémoire, cadencée par le portier, adressée par le séquenceur, qui émet des micro-instructions de sortie, des informations codées pour le séquenceur et transmet au portier des signaux de validation de sortie,
- un registre pour conserver temporairement les comptes rendus de sortie,
- au moins un registre pour conserver temporairement les micro-instructions de sortie,
le séquenceur, la mémoire et les registres étant pilotés par le portier et lui transmettant le signal de fin d'exécution et les signaux de validation.

4. Unité de contrôle selon une des revendications 1 ou 2, caractérisée en ce que l'opérateur de contrôle comprend:
- un registre pour conserver temporairement les comptes rendus de sortie,
- au moins un registre pour conserver temporairement les micro-instructions de sortie,
- un réseau à logique programmée qui reçoit les micro-instructions d'entrée et les comptes rendus d'entrée et émet, pour chaque micro-instruction d'entrée, une suite de micro-instructions de sortie et un compte rendu de sortie,
le réseau à logique programmée et les registres étant pilotés par le portier et lui transmettant le signal de fin d'exécution et les signaux de validation.

5. Unité de contrôle selon une des revendications 3 ou 4, caractérisée en ce que le générateur de phases pilote les registres de sortie de micro-instructions et le registre de sortie des comptes rendus.

6. Unité de contrôle selon une des revendications 2 à 5, caractérisée en ce que le générateur de phases délivre des phases qui sont individuellement calibrées et positionnées dans le temps à l'aide d'un signal de début et d'un signal de fin de la phase selon un nombre multiple de demi-période d'horloge.

7. Unité de contrôle selon la revendication 6, caractérisée en ce que l'état logique d'une phase, pendant la durée de cette phase, peut être le même que l'état logique d'un signal donné.

## Claims

1. A control unit (10) which acts on processing modules (152, 153,154) of an integrated circuit for data processing and which applies operating commands thereto, which control unit is controlled by a clock (15) and by an instruction generator (16) which supplies instructions, characterized in that it comprises at least one control module (100) which is formed by a control operator (100b) and a gating means (100a) which receives an input semaphore (SE) and outputs at least one output semaphore (SSⱼ₁) and which, after reception of the input semaphore, supplies its control operator with signals adapted to its functional parameters, which gating means validates, at the end of the processing operation performed by its control operator, the supply of sequences of operating commands from the control operator to at least one subsequent processing module or of sequences of microinstructions to at least one subsequent control module (101, 103) under the control of output semaphores which are applied:
- to said subsequent control module in order to ensure that its gating means (101a, 103a) prepares its control operator for the reception of said sequences of microinstructions and that for each of them it outputs sequences of output microinstructions to other control modules (102) or sequences of operating commands to other processing modules (153), and deactivates the input semaphore at the end of the execution of each input microinstruction,
- or to said subsequent processing module in order to ensure that it receives said sequences of operating commands and deactivates the input semaphore at the end of the execution of each operating command, the gating means also comprising:
. for the purpose of informing a preceding gating means, means (217) for deactivating their input semaphore when all subsequent control operators and all subsequent processing modules have terminated the execution of their sequences of input microinstructions or their sequences of operating commands,
. and, for each microinstruction issued, means for receiving validated output semaphores (225, 235) which are deactivated by a subsequent gating means or by a subsequent processing module,
the control modules also exchanging input/output execution messages from their operator which (252, 254), in association with the exchange of semaphores by their gating elements, ensures self-clocking sequencing for each control module which is also controlled by the clock, each processing module also being controlled by the same clock, the first control module (100) receiving its instructions directly from the instruction generator and exchanging a semaphore therewith.

2. A control unit as claimed in Claim 1, characterized in that the gating means comprises:
- an input circuit for the input semaphore and an output validation circuit for each output semaphore, which circuits are validated by the control operator,
- a one-pulse generator which is activated either by activation of the input semaphore or by deactivation of the output semaphores,
- a phase generator which receives said pulse, applies the necessary phases to the control operator, and controls the output validation circuits and the input circuit.

3. A control unit as claimed in Claim 1 or 2, characterized in that the control operator comprises:
- a sequencer which receives the input microinstructions, the input messages, and the information supplied by the memory, which sequencer determines, as a function of its inputs, the new address of the word to be read in the memory, and which generates, at the end of the execution of each input microconstruction, the end-of-execution signal and an output message,
- a memory, clocked by the gating means and addressed by the sequencer, which supplies output microinstructions and encoded information for the sequencer, and supplies the gating means with output validation signals,
- a register for temporarily saving the output messages,
- at least one register for temporarily saving the output microinstructions,
the sequencer, the memory and the registers being controlled by the gating means and supplying this gating means with the end-of-execution signal and the validation signals.

4. A control unit as claimed in Claim 1 or 2, characterized in that the control operator comprises:
- a register for temporarily saving the output messages,
- at least one register for temporarily saving the output microinstructions,
- a programmable logic array which receives the input microinstructions and the input messages and which supplies, for each input microinstruction, a sequence of output microinstructions and an output message,
the programmable logic array and the registers being controlled by the gating means and supplying the gating means with the end-of-execution signal and the validation signals.

5. A control unit as claimed in Claim 3 or 4, characterized in that the phase generator controls the output registers for the microinstructions and the output register for the messages.

6. A control unit as claimed in any one of the Claims 2 to 5, characterized in that the phase generator supplies phases which are individually calibrated and positioned in time by means of a start signal and an end-of-phase signal, using a multiple of half clock periods.

7. A control unit as claimed in Claim 6, characterized in that the logic state of a phase may be the same as the logic state of a given signal for the duration of this phase.

## Patentansprüche

1. Steuereinheit (10), die auf Verarbeitungsmodule (152, 153, 154) einer integrierten Schaltung zur Datenverarbeitung einwirkt, denen diese Betriebskommandos übermittelt, wobei die Steuereinheit von einem Taktgeber (15) und von einem Befehle liefernden Befehlsgenerator (16) gesteuert wird, dadurch gekennzeichnet, daß sie mindestens ein Steuermodul (100) umfaßt, das aus einem Steueroperator (100b) und einer Verkehrsleiteinheit (100a) gebildet wird, die einen Eingangssemaphor (SE) empfängt und mindestens einen Ausgangssemaphor (SSⱼ) weitergibt und die nach Empfang des Eingangssemaphors ihrem Steueroperator an seine Funktionsparameter angepaßte Signale liefert, wobei die Verkehrsleiteinheit am Ende der von ihrem Steueroperator ausgeführten Verarbeitung die Lieferung von Betriebskommandofolgen durch den Steueroperator an mindestens ein folgendes Verarbeitungsmodul oder von Mikrobefehlfolgen an mindestens ein folgendes Steuermodul (101, 103) freigibt, unter der Kontrolle von Ausgangssemaphoren, die weitergegeben werden:
- an das folgende Steuermodul, damit seine Verkehrsleiteinheit (101a, 103a) ihren Steueroperator einstellt, damit er die Mikrobefehlfolgen empfängt und für jede davon seinerseits an weitere Steuermodule (102) Mikrobefehlfolgen oder an weitere Verarbeitungsmodule (153) Betriebskommandofolgen aussendet, und damit sie den Eingangssemaphor am Ende der Ausführung jedes Eingangsmikrobefehls deaktiviert,
- oder an das folgende Verarbeitungsmodul, damit es die Betriebskommandofolgen empfängt und den Eingangssemaphor am Ende der Ausführung jedes Betriebskommandos deaktiviert,
wobei die Verkehrsleiteinheiten außerdem folgendes enthalten:
. um es einer vorhergehenden Verkehrsleiteinheit zu melden, Mittel (217) zur Deaktivierung ihres Eingangssemaphors, wenn alle folgenden Steueroperatoren und alle folgenden Verarbeitungsmodule die Ausführung ihrer Eingangsmikrobefehlfolgen bzw. ihrer Betriebskommandofolgen beendet haben,
. und, für jeden ausgegebenen Mikrobefehl, Mittel zum Empfang der gültig gemachten Ausgangssemaphore (225, 235), die von einer darauffolgenden Verkehrsleiteinheit oder einem darauffolgenden Verarbeitungsmodul deaktiviert worden sind,
wobei die Steuermodule außerdem miteinander über ihre Operatoren (252, 254) Eingangs-/Ausgangsausführungsberichte austauschen, wodurch, zusammen mit dem Austausch von Semaphoren über ihre Verkehrsleiteinheiten, für jedes Steuermodul, das ebenfalls von dem Taktgeber gesteuert wird, für eine selbsttaktende Ablaufsteuerung gesorgt ist, wobei jedes Verarbeitungsmodul auch von demselben Taktgeber gesteuert wird und das erste Steuermodul (100) seine Befehle direkt von dem Befehlsgenerator erhält und mit ihm einen Semaphor austauscht.

2. Steuereinheit nach Anspruch 1, dadurch gekennzeichnet, daß die Verkehrsleiteinheit folgendes umfaßt:
- einen Eingangsschaltkreis des Eingangssemaphors und einen Ausgangsfreigabeschaltkreis für jeden Ausgangssemaphor, wobei diese Schaltungen durch den Steueroperator freigegeben werden,
- einen Generator eines Impulses, der entweder durch die Aktivierung des Eingangssemaphors oder durch Deaktivierung der Ausgangssemaphore ausgelöst wird,
- einen Phasengenerator, der den genannten Impuls empfängt, dem Steueroperator die notwendigen Phasen liefert und die Ausgangsfreigabeschaltkreise und den Eingangsschaltkreis steuert.

3. Steuereinheit nach einem der Ansprüche 1 oder 2, dadurch gekennzeichnet, daß der Steueroperator folgendes umfaßt:
- eine Ablaufsteuerungsschaltung, die die Eingangsmikrobefehle, die Eingangsberichte und die von dem Speicher gesendeten Informationen empfängt, die als Funktion ihrer Eingänge die neue Adresse des zu lesenden Wortes im Speicher bestimmt und die am Ende der Ausführung jedes Eingangsmikrobefehls das Ende-der-Ausführung-Signal und einen Ausgangsbericht erzeugt,
- einen von der Verkehrsleiteinheit getakteten, von der Ablaufsteuerung adressierten Speicher, der Ausgangsmikrobefehle, für die Ablaufsteuerung codierte Informationen aussendet und an die Verkehrsleiteinheit Ausgangsfreigabesignale weitergibt,
- ein Register zur Zwischenspeicherung der Ausgangsberichte,
- mindestens ein Register zur Zwischenspeicherung der Ausgangsmikrobefehle,
wobei die Ablaufsteuerungsschaltung, der Speicher und die Register von der Verkehrsleiteinheit gesteuert werden und an sie das Ende-der-Ausführung-Signal und die Freigabesignale weitergeben.

4. Steuereinheit nach einem der Ansprüche 1 oder 2, dadurch gekennzeichnet, daß der Steueroperator folgendes umfaßt:
- ein Register zur Zwischenspeicherung der Ausgangsberichte,
- mindestens ein Register zur Zwischenspeicherung der Ausgangsmikrobefehle,
- ein programmierbares logisches Feld, das die Mikrobefehle und die Eingangsberichte empfängt und für jeden Eingangsmikrobefehl eine Folge von Ausgangsmikrobefehlen und einen Ausgangsbericht ausgibt,
wobei das programmierbare logische Feld und die Register von der Verkehrsleiteinheit gesteuert werden und an sie das Ende-der-Ausführung-Signal und die Freigabesignale weitergeben.

5. Steuereinheit nach einem der Ansprüche 3 oder 4, dadurch gekennzeichnet, daß der Phasengenerator die Mikrobefehlsausgangsregister und das Berichte-Ausgangsregister steuert.

6. Steuereinheit nach einem der Ansprüche 2 bis 5, dadurch gekennzeichnet, daß der Phasengenerator mit Hilfe eines Beginn- und eines Ende-Phase-Signals entsprechend einem Vielfachen von halben Taktdauern individuell eingestellte und zeitlich positionierte Phasen liefert.

7. Steuereinheit nach Anspruch 6, dadurch gekennzeichnet, daß der Logikzustand einer Phase während der Dauer dieser Phase der gleiche sein kann wie der Logikzustand eines gegebenen Signals.
